# EUROPÄISCHE PATENTSCHRIFT

(11) **EP 2 637 921 B1**
(45) Veröffentlichungstag und Bekanntmachung des Hinweises auf die Patenterteilung: **04.10.2017**
(21) Anmeldenummer: 11808614.9
(22) Anmeldetag: 14.12.2011
(51) Int. Cl.: B63G 8/08, B63H 23/24

(54) **SCHWIMMENDE ODER TAUCHENDE EINRICHTUNG MIT EINEM ELEKTROLYSEUR**
FLOATING OR SUBMERGING DEVICE WITH AN ELECTROLYSER
DISPOSITIF FLOTTANT OU IMMERGÉ MUNI D'UN ÉLECTROLYSEUR

(30) Priorität: 21.01.2011 DE 102011002975
(43) Veröffentlichungstag der Anmeldung: 18.09.2013
(73) Patentinhaber: Siemens Aktiengesellschaft, 80333 München (DE)
(72) Erfinder: HOFFMANN, Joachim, 90559 Burgthann (DE); BECKER, Eberhard, 20149 Hamburg (DE)
(86) Internationale Anmeldenummer: PCT/EP2011/072705
(87) Internationale Veröffentlichungsnummer: WO 2012/097925

(56) Entgegenhaltungen:
- EP-B1- 1 354 387
- DE-T2- 69 208 193
- US-A1- 2002 090 868
- US-A1- 2005 252 214
- US-A1- 2006 071 630

## Beschreibung

Die Erfindung betrifft eine schwimmende oder tauchende Einrichtung, insbesondere ein Über- oder Unterwasserschiff, mit Brennstoffzellen zur Erzeugung elektrischer Energie für elektrische Verbraucher an Bord der Einrichtung, wobei die Brennstoffzellen mit Wasserstoff als Brennstoff betreibbar sind; derartige schwimmende oder tauchende Einrichtungen sind beispielsweise aus der WO 2005/073077A2, US 2006/0071630 A1 und US 2005/0252214 A1 bekannt.

Brennstoffzellen ermöglichen eine emissionsfreie und geräuscharme Erzeugung elektrischer Energie. Aufgrund dieser Vorteile kommen Brennstoffzellen zunehmend in schwimmenden oder tauchenden Einrichtungen zur Erzeugung elektrischer Energie für elektrische Verbraucher an Bord der schwimmenden oder tauchenden Einrichtung zum Einsatz. Beispiele für derartige schwimmende oder tauchende Einrichtungen sind Überwasserschiffe, Unterwasserschiffe (Unterseeboote), UMVs (Unmanned Marine Vehicles) oder Offshore-Plattformen. Elektrische Verbraucher sind beispielsweise ein Propulsionsantrieb, Pumpen, Beleuchtung, Klimatisierung, Geräte der Nautik und der Betriebsführung sowie zugehörige Automatisierungs- und Steuerungskomponenten). Als Brennstoffzellen kommen beispielsweise PEM-, MCFC-, MDFC-, SOFC- oder alkalische Brennstoffzellen zum Einsatz.

So weisen beispielsweise bereits viele moderne Unterseeboote einen außenluftunabhängigen Antrieb auf, bei dem Brennstoffzellen zusammen mit einer Batterie bei Tauchfahrt einen elektrischen Propulsionsantrieb des Unterseebootes sowie sämtliche weiteren elektrische Verbraucher an Bord des Unterseebootes mit elektrischer Energie versorgen. Bei Schnorchelfahrt oder im aufgetauchten Zustand erfolgt die Energieversorgung dagegen durch einen Dieselgenerator. Ein derartiges Unterseeboot ist beispielsweise aus der WO 2005/073077A2 bekannt. Die Brennstoffzellen werden dabei üblicherweise mit technisch reinem Wasserstoff als Brennstoff und technisch reinem Sauerstoff als Oxidationsmittel betrieben. Der Wasserstoff und der Sauerstoff sind hierzu in speziellen Tanks an Bord oder an der Außenhülle des Unterseebootes gespeichert.

Außerdem sind beispielsweise aus der WO 2004/026685 A2 Navy-Überwasserschiffe wie z.B. Fregatten bekannt, die luftbetriebene Brennstoffzellen aufweisen, die elektrische Verbraucher einschließlich des Propulsionsantriebs an Bord des Schiffes in speziellen Einsatzzuständen (z.B. emissionsloser Propulsionsantrieb) des Schiffes mit elektrischer Energie versorgen. Weiterhin sind Überwasserschiffe bekannt, die Brennstoffzellen als Hilfsstromversorgung (APU-Auxiliary Power Unit) für elektrische Verbraucher an Bord des Schiffes aufweisen. Die Brennstoffzellen werden in diesen Fällen üblicherweise mit technisch reinem Wasserstoff als Brennstoff und Luft als Oxidationsmittel betrieben. Der Wasserstoff wird hierzu in speziellen Tanks an Bord des Schiffes gespeichert.

Wenn die Wasserstoffvorräte und ggf. die Sauerstoffvorräte an Bord der schwimmenden oder tauchenden Einrichtung erschöpft sind, müssen diese von außerhalb der schwimmenden oder tauchenden Einrichtung erneuert werden. Dies kann beispielsweise in einem Hafen oder durch ein Versorgungsschiff erfolgen.

Speziell der Wasserstoff kann alternativ auch direkt an Bord mit Hilfe eines Reformers aus Dieselkraftstoff, Methanol, Ethanol oder Erdgas erzeugt werden. Eine derartige Lösung ist beispielsweise aus der EP 1354387 B1 bekannt. Allerdings ist dies mit größerem technischen Aufwand verbunden und es muss an Bord der schwimmenden oder tauchenden Einrichtung Betriebsstoff für den Reformer mitgeführt werden, der ebenfalls erschöpfen kann. Außerdem werden durch den Reformer Emissionen erzeugt.

Die US 2002/090868 A1 offenbart eine schwimmende Einrichtung gemäß Oberbegriff des Patentanspruchs 1.

Es ist ausgehend hiervon Aufgabe vorliegender Erfindung, bei einer schwimmenden oder tauchenden Einrichtungen mit Brennstoffzellen zur Erzeugung elektrischer Energie für elektrische Verbraucher an Bord der Einrichtung eine emissionsfreie und geräuscharme Versorgung der Brennstoffzellen mit Wasserstoff, wenn benötigt auch mit Sauerstoff, direkt an Bord der schwimmenden oder tauchenden Einrichtung bereitzustellen, wobei dies auch unter außenluftunabhängigen Betriebsbedingungen und mit geringem Platzbedarf möglich sein soll.

Die Lösung dieser Aufgabe gelingt durch eine schwimmende oder tauchende Einrichtung mit den Merkmalen des Patentanspruchs 1. Vorteilhafte Ausgestaltungen der schwimmenden oder tauchenden Einrichtung sind jeweils Gegenstand der Unteransprüche.

Eine erfindungsgemäße schwimmende oder tauchende Einrichtung weist einen Elektrolyseur zur Erzeugung von Wasserstoff für die Brennstoffzellen durch eine Elektrolyse von Wasser unter Verwendung von elektrischer Energie sowie einen Wasserstoffspeicher zur Speicherung des von dem Elektrolyseur erzeugten Wasserstoffs vor dessen Zufuhr zu den Brennstoffzellen auf.

Ein Elektrolyseur ist eine Vorrichtung, die Wasser mit Hilfe von elektrischem Strom in Wasserstoff und Sauerstoff zerlegt. Ein Elektrolyseur besteht üblicherweise aus mehreren elektrisch in Serie geschalteten Elektrolysezellen, die jeweils aus einer Anode und einer Kathode bestehen. Im Fall von alkalischen Elektrolysezellen befindet sich zwischen der Anode und der Kathode ein Elektrolyt, üblicherweise Kalilauge, und eine gasdichte Membran. Im Fall von PEM-Elektrolysezellen befindet sich zwischen der Anode und der Kathode eine Polymer-Elektrolyt-Membran.

Ein Elektrolyseur arbeitet geräuschlos und emissionsfrei. Er benötigt zu seinem Betrieb nur elektrischen Strom und Wasser, die an Bord einer schwimmenden oder tauchenden Einrichtung üblicherweise schon für andere Zwecke vorhanden sind oder als Nebenprodukte erzeugt werden. Wasser wird auch von den Brennstoffzellen als Reaktionsprodukt erzeugt. Zudem kann das Wasser für den Betrieb des Elektrolyseurs auch durch eine Aufbereitung aus Fluss- oder Seewasser gewonnen und steht somit weltweit prinzipiell unbegrenzt zur Verfügung. Der Elektrolyseur erzeugt dabei technisch reinen Wasserstoff und Sauerstoff, die eine hohe Energiedichte aufweisen. Es ist somit nur relativ wenig zusätzlicher apparativer Aufwand und Platzbedarf für die Wasserstofferzeugung notwendig. Wesentlich ist auch, dass der Elektrolyseur zu seinem Betrieb keine Außenluft benötigt, so dass er auch bei einem außenluftunabhängigen Betrieb der schwimmenden oder tauchenden Einrichtung betrieben werden kann. Der Elektrolyseur kann dabei auch einen modularen Aufbau aus mehreren einzelnen Modulen mit jeweils mehreren Elektrolysezellen aufweisen, wobei die Module eingangsseitig elektrisch in Serie und/oder parallel geschalteten sind.

Durch den Wasserstoffspeicher kann die Wasserstofferzeugung zeitlich von dem Wasserstoffverbrauch durch die Brennstoffzellen entkoppelt werden, d.h. die Erzeugung des Wasserstoffs kann beispielsweise erfolgen, wenn elektrische Überschussenergie an Bord der schwimmenden oder tauchenden Einrichtung für den Betrieb des Elektrolyseurs vorhanden ist, und ist nicht an einen gleichzeitigen Verbrauch des Wasserstoffs in den Brennstoffzellen gebunden.

Wenn die Brennstoffzellen mit reinem Sauerstoff oder mit sauerstoffangereicherter Luft betrieben werden, weist die schwimmende oder tauchende Einrichtung von Vorteil zusätzlich auch einen Sauerstoffspeicher zur Speicherung des von dem Elektrolyseur erzeugten Sauerstoffs vor dessen Zufuhr zu den Brennstoffzellen auf. Hierdurch kann auch die Sauerstofferzeugung zeitlich von dem Sauerstoffverbrauch durch die Brennstoffzellen entkoppelt werden.

Gemäß einer weiteren vorteilhaften Ausgestaltung weist die schwimmende oder tauchende Einrichtung einen Wasserspeicher zur Speicherung von Wasser für die Elektrolyse auf. In dem Wasserspeicher kann von anderen Nebenprozessen (z.B. von den Brennstoffzellen) erzeugtes Wasser oder behandeltes Fluss-oder Seewasser unabhängig von dem aktuellen Wasserverbrauch des Elektrolyseurs zwischengespeichert werden und steht dann bei Bedarf für den Elektrolyseur zur Verfügung.

Die Brennstoffzellen können dabei mit dem Wasserspeicher zur Zufuhr von Produktwasser der Brennstoffzellen zu dem Wasserspeicher verbunden sein.

Zur Verringerung des Platzbedarfs für den Wasserstoffspeicher und/oder Sauerstoffspeicher kann ein Kompressor und/oder eine Kühleinrichtung zur Komprimierung und/oder Verflüssigung des Wasserstoffes und/oder Sauerstoffes vor dessen Zufuhr zu dem Wasserstoffspeicher bzw. Sauerstoffspeicher vorhanden sein.

Zur Erzeugung der elektrischen Energie für den Elektrolyseur kann die schwimmende oder tauchende Einrichtung einen von einer Antriebsmaschine angetriebenen Generator aufweisen. Bei der Antriebsmaschine kann es sich beispielsweise um eine Verbrennungskraftmaschine (z.B. einen Dieselmotor oder eine Gasturbine), eine Dampfturbine oder eine Abgasturbine handeln. Gemäß einer besonders vorteilhaften Ausgestaltung handelt es sich bei der Dampfturbine oder Abgasturbine um eine Turbine eines Abwärmenutzungsystems (waste heat recovery system).

Bevorzugt dient der Generator nicht nur zur Versorgung des Elektrolyseurs, sondern auch der anderen elektrischen Verbraucher an Bord der schwimmenden oder tauchenden Einrichtung mit elektrischer Energie und ist hierzu mit diesen elektrischen Verbrauchern elektrisch verbindbar bzw. verbunden.

Von Vorteil ist der Generator über einen Gleichrichter mit dem Elektrolyseur verbunden. Der Gleichrichter ist dabei bevorzugt derart steuerbar, dass er dem Elektrolyseur auch bei unterschiedlicher Höhe und Frequenz einer von dem Generator erzeugten Wechselspannung bedarfsgerecht eine für den Betrieb des Elektrolyseurs benötigte Gleichspannung bereitstellt. Hierdurch können handelsübliche Elektrolyseure zum Einsatz kommen, die eingangsseitig nicht speziell an den Generator angepasst werden müssen.

Für eine flexible und bedarfsgerechte Versorgung des Elektrolyseurs und anderer Verbraucher an Bord der schwimmenden oder tauchenden Einrichtung sind der Generator, die Brennstoffzellen, der Elektrolyseur und die elektrischen Verbraucher erfindungsgemäß an ein gemeinsames elektrisches Netz angeschlossen.

Das elektrische Netz umfasst dabei von Vorteil ein Gleichstromnetz und der Elektrolyseur ist eingangsseitig mit dem Gleichstromnetz verbindbar. Hierdurch kann ein besonders ausfallsicherer Betrieb des Elektrolyseurs gewährleistet werden.

Parallel zu dem Generator kann auch eine Batterie geschaltet sein. Hierdurch kann elektrische Überschussenergie an Bord der schwimmenden oder tauchenden Einrichtung besonders flexibel in unterschiedlichen Energiespeichern zwischengespeichert und bei Nichtverfügbarkeit des Generators für die elektrischen Verbraucher zur Verfügung gestellt werden.

Erfindungsgemäß ist der Energieverbrauch des Elektrolyseurs durch eine Steuer- und/oder Regelungseinrichtung steuerbar und/oder regelbar. Der Energieverbrauch kann dann optimal auf die zu einem bestimmten Zeitpunkt für den Elektrolyseur zur Verfügung stehende elektrische Energie angepasst werden.

Die Steuer- und/oder Regelungseinrichtung ist bevorzugt dazu eingerichtet, den Energieverbrauch des Elektrolyseurs derart zu steuern und/oder zu regeln, dass eine Antriebsmaschine zum Antrieb eines Generators zur Erzeugung elektrischer Energie für den Elektrolyseur in einem vorgegebenen Betriebspunkt, insbesondere in einem Betriebspunkt mit einem optimalen Wirkungsgrad, arbeitet.

Gemäß einer weiteren besonders vorteilhaften Ausgestaltung ist die Steuer- und/oder Regelungseinrichtung dazu eingerichtet, eine Energieerzeugung durch zumindest einen Generator sowie den Energieverbrauch der elektrischen Verbraucher und des Elektrolyseurs in Abhängigkeit von einer benötigten Wasserstoff- und oder Sauerstoffmenge zu steuern und/oder zu regeln, insbesondere derart zu steuern und/oder zu regeln, dass der Elektrolyseur in einem Betriebspunkt mit maximaler Wasserstoff- und/oder Sauerstofferzeugung arbeitet.

Es ist dabei auch möglich, dass der Elektrolyseur einige oder alle der Brennstoffzellen umfasst, d.h. die Brennstoffzellen erzeugen im Brennstoffzellenbetrieb elektrischen Strom und im Elektrolysebetrieb Wasserstoff und Sauerstoff.

Weiterhin kann der Elektrolyseur und/oder der Sauerstoffspeicher auch an ein Lufterneuerungssystem der schwimmenden oder tauchenden Einrichtung zu dessen Versorgung mit Sauerstoff angeschlossen sein. Somit kann auf Seite des Lufterneuerungssystems eine Sauerstofferzeugung und/oder -speicherung entfallen oder zumindest reduziert werden.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert. Darin zeigen:
- FIG 1: ein Gleichstromnetz eines Unterseebootes mit einem Elektrolyseur und
- FIG 2: ein elektrisches Netz eines Überwasserschiffes mit einem Elektrolyseur.

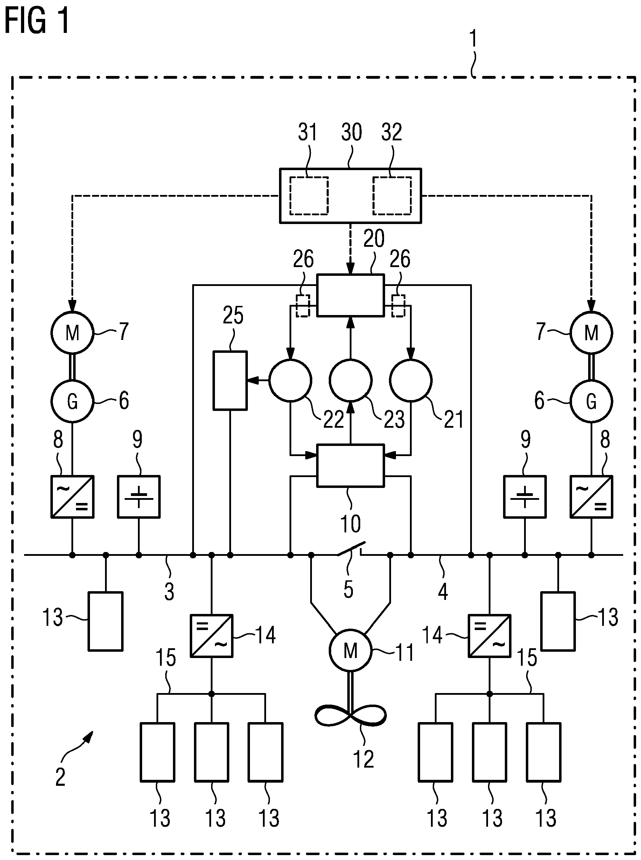

Die FIG 1 zeigt in vereinfachter prinzipieller Darstellung ein bemanntes Unterseeboot 1 mit einem Gleichstrom-Fahrnetz 2, das aus zwei Teilnetzen 3, 4 besteht, die über eine Netzkupplung 5 miteinander verbunden sind. Jedes der Teilnetze 3, 4 weist zur Erzeugung elektrischer Energie einen Generator 6 auf, der von einer Antriebsmaschine, hier von einem Dieselmotor 7, angetrieben wird und über einen Gleichrichter 8 in das jeweilige Teilnetz 3 bzw. 4 einspeist. Parallel zu der Kombination aus Generator 6 und Gleichrichter 8 ist jeweils eine Batterie 9 geschaltet. Außerdem ist parallel dazu eine Brennstoffzellenanlage 10 als Energieerzeuger geschaltet.

Die erzeugte Energie dient zur Speisung eines ebenfalls parallel dazu geschalteten DC-Motors oder DC-gespeisten Motors 11 zum Antrieb eines Propellers 12 des Unterseebootes 1 und weiterer elektrischer Verbraucher 13, die - ggf. auch über einen Wechselrichter 14 und ein Bordnetz 15 - mit dem Fahrnetz 2 verbunden sind. Die Brennstoffzellenanlage 10 kann auch über einen nicht näher dargestellten DC/DC-Steller mit dem Gleichstrom-Fahrnetz 2 verbunden sein. Die einzelnen Komponenten sind über nicht näher dargestellte Schalter an das Gleichstrom-Fahrnetz 2 angeschlossen.

Beispielsweise hat das Gleichstrom-Fahrnetz 2 eine Nennspannung im Bereich von 400 - 800 V dc, insbesondere von 600 V dc, der Motor 11 eine Leistung im Bereich von 500 kW bis 10 MW, insbesondere von 2 MW, die Generatoren eine Leistung im Bereich von 0.5 bis 6 MW und die Brennstoffzellenanlage 10 eine Leistung im Bereich von 50 bis 1000 kW, insbesondere von 500 kW.

Bei einer Schnorchelfahrt oder im aufgetauchten Zustand des Unterseebootes werden der Motor 11 und die Verbraucher 13 durch die Generatoren 6 und bei Tauchfahrt durch die Batterien 9 und/oder die Brennstoffzellenanlage 10 mit elektrischer Energie versorgt.

Die Brennstoffzellen der Brennstoffzellenanlage 10 werden mit technisch reinem Wasserstoff und reinem Sauerstoff betrieben.

Der Wasserstoff und der Sauerstoff werden durch einen Elektrolyseur 20 erzeugt, der an seinem elektrischen Eingang über nicht näher dargestellten Schalter sowohl mit dem ersten Teilnetz 3 als auch mit dem zweiten Teilnetz 4 verbindbar ist und somit einen weiteren elektrischen Verbraucher darstellt.

Zur Zwischenspeicherung des von dem Elektrolyseur 20 erzeugten Wasserstoffes und Sauerstoffes weist das Unterseeboot 1 einen Wasserstoffspeicher 21 und einen Sauerstoffspeicher 22 auf, die mit einem Wasserstoffausgang bzw. einem Sauerstoffausgang des Elektrolyseurs 20 verbunden sind, um ihnen den erzeugten Wasserstoff und Sauerstoff zuzuführen.

Auch die Brennstoffzellenanlage 10 ist mit dem Wasserstoffspeicher 21 und dem Sauerstoffspeicher 22 verbunden, so dass der Brennstoffzellenanlage 10 Wasserstoff aus dem Wasserstoffspeicher 21 und Sauerstoff aus dem Sauerstoffspeicher 22 zuführbar ist.

Zur Verringerung des Platzbedarfs für den Wasserstoffspeicher 21 und/oder Sauerstoffspeicher 22 kann ein Kompressor und/oder eine Kühleinrichtung 26 zur Komprimierung und/oder Verflüssigung des Wasserstoffes und/oder Sauerstoffes vor dessen Zufuhr zu dem Wasserstoffspeicher 21 bzw. Sauerstoffspeicher 22 vorhanden sein. Weiterhin kann eine entsprechende Einrichtung zur Aufbereitung (z.B. Dekomprimierung und/oder Verdampfung) des gespeicherten Wasserstoffes und/oder Sauerstoffes vor dessen Zufuhr zur der Brennstoffzellenanlage 10 vorhanden sein.

Das Unterseeboot 1 weist weiterhin einen mit einem Wasserzufuhreingang des Elektrolyseurs 20 verbundenen Wasserspeicher 23 zur Speicherung von Wasser für die Elektrolyse auf. Der Wasserspeicher 23 ist mit der Brennstoffzellenanlage 10 zur Zufuhr von Produktwasser der Brennstoffzellen zu dem Wasserspeicher 23 verbunden.

Der Energieverbrauch des Elektrolyseurs 20 ist hierbei durch eine Steuer- und/oder Regelungseinrichtung 30 steuerbar und/oder regelbar und kann somit optimal auf die zu einem bestimmten Zeitpunkt in dem Gleichstrom-Fahrnetz 2 zur Verfügung stehende elektrische Energie angepasst werden.

Die Steuer- und/oder Regelungseinrichtung 30 weist dabei eine erste Steuer- und/oder Regelfunktion 31 auf, die dazu eingerichtet ist, den Energieverbrauch des Elektrolyseurs 20 derart zu steuern und/oder zu regeln, dass der den Generator 6 antreibende Dieselmotor 7 bzw. die die Generatoren 6 antreibenden Dieselmotoren 7 in einem vorgegebenen Betriebspunkt, insbesondere in einem Betriebspunkt mit einem optimalen Wirkungsgrad, arbeitet bzw. arbeiten. Wenn sich beispielsweise die Dieselmotoren 7 in einem Betriebspunkt mit Teillast und somit einem schlechten Wirkungsgrad befinden, wird der Energieverbrauch des Elektrolyseurs 20 erhöht und die Dieselmotoren 7 werden in einen Betriebspunkt mit erhöhter Leistungsabgabe und folglich einem besseren Wirkungsgrad gebracht. Umgekehrt wird durch die erste Steuer- und/oder Regelfunktion 31 bei einer Überlastung der Dieselmotoren 7 und einem damit verbundenen schlechten Wirkungsgrad der Energieverbrauch des Elektrolyseurs 20 reduziert und somit die Dieselmotoren 7 in einen Betriebspunkt mit niedrigerer Leistungsabgabe und folglich einem besseren Wirkungsgrad gebracht.

Außerdem weist die Steuer- und/oder Regelungseinrichtung 30 eine zweite Steuer- und/oder Regelfunktion 32 auf, dazu eingerichtet ist, die Energieerzeugung durch den Generator 6 bzw. die Generatoren 6 sowie den Energieverbrauch des Motors 11, der weiteren elektrischen Verbraucher 13 und des Elektrolyseurs 20 in Abhängigkeit von einer benötigten Wasserstoffmenge und/oder Sauerstoffmenge zu steuern und/oder zu regeln, insbesondere derart zu steuern und/oder zu regeln, dass der Elektrolyseur in einem Betriebspunkt mit maximaler Wasserstoff- und/oder Sauerstofferzeugung arbeitet.

Ist für das Unterseeboot 1 beispielsweise in Kürze eine längere Tauchfahrt im außenluftunabhängigen Brennstoffzellenbetrieb geplant, für die ein möglichst großer Vorrat an Wasserstoff und Sauerstoff zur Verfügung stehen soll, so sorgt die zweite Steuer- und/oder Regelfunktion 32 dafür, dass dem Elektrolyseur 20 eine maximal von ihm aufnehmbare Energie zur Verfügung steht, so dass er in kürzester Zeit den größtmöglichen Ausstoß an Wasserstoff und Sauerstoff erzeugt. Die anderen elektrischen Verbraucher müssen hierbei in ihrem elektrischen Verbrauch gegenüber dem Elektrolyseur 20 zurücktreten.

Die erste und die zweite Steuer- und/oder Regelfunktion 31, 32 können dabei in Software und/oder Hardware realisiert sein und bei Bedarf entweder manuell von der Brücke des Unterseebootes 1 oder automatisch durch ein übergeordnetes Automatisierungssystem ausgewählt werden. Die Steuer- und/oder Regelungseinrichtung 30 ist hierzu bevorzugt in ein übergeordnetes Automatisierungssystem des Unterseebootes 1 integriert.

Der Sauerstoffspeicher 22 ist zusätzlich auch an ein Lufterneuerungssystem 25 des Unterseebootes 1 zu dessen Versorgung mit Sauerstoff angeschlossen. Somit kann auf Seite des Lufterneuerungssystems 25 eine separate Sauerstofferzeugung und/oder -speicherung entfallen oder zumindest reduziert werden.

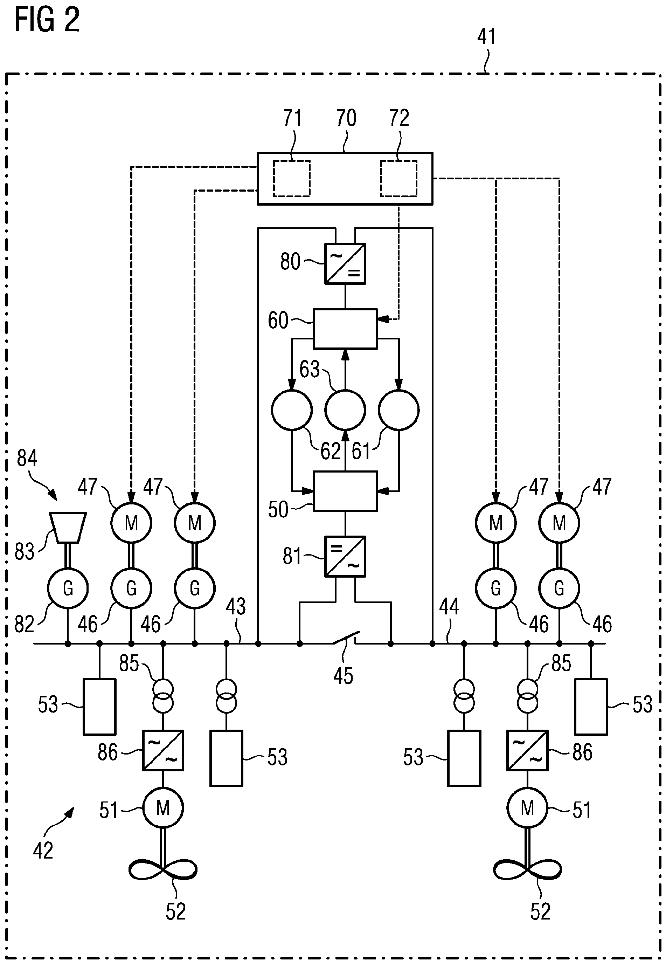

Die FIG 2 zeigt in vereinfachter und prinzipieller Darstellung ein Überwasserschiff 41 mit einem elektrischen Wechselspannungsnetz 42, das ebenfalls aus zwei Teilnetzen 43, 44 besteht, die über eine Netzkupplung 45 miteinander verbunden bzw. verbindbar sind. Jedes der Teilnetze 43, 44 weist zur Erzeugung elektrischer Energie zwei Generatoren 46 auf, die von jeweils einer Antriebsmaschine, hier von einem mittelschnelllaufenden Dieselmotor 47, angetrieben werden.

Für eine emissionsfreie Stromversorgung im Hafen oder in emissionssensiblen Gewässern (z.B. in der Arktis oder in Fjorden) ist außerdem eine Brennstoffzellenanlage 50 vorhanden, die über einen Wechselrichter 81 mit beiden Teilnetzen 43, 44 verbunden ist. Außerdem speist ein von einer Dampfturbine oder Abgasturbine 83 angetriebener Generator 82 eines Abwärmenutzungssystems 84 in das Teilnetz 43 ein.

Die erzeugte Energie dient zur Speisung elektrischer Motoren 51 zum Antrieb jeweils eines Propellers 52 des Überwasserschiffes 41 und weiterer elektrischer Verbraucher 53, die mit dem Netz 42 verbunden sind. Die elektrischen Motoren 51 und die weiteren Verbraucher 53 können dabei über Transformatoren 85 und Umrichter 86 (z.B. Spannungszwischenkreisumrichter, Stromzwischenkreisumrichter) sowie ein Niederspannungsbordnetz mit dem Netz 42 verbunden sein.

Die einzelnen Komponenten sind über nicht näher dargestellte Schalter an das Netz 42 angeschlossen.

Bei dem Schiff handelt es sich beispielsweise um ein Kreuzfahrtschiff mit einem dieselelektrischen Antriebssystem, wobei das elektrische Netz 42 eine Nennspannung im Bereich von 6-12 kVac, insbesondere von 6.6 kVac oder 11 kVac, die Motoren 51 in der Summe eine Gesamtpropulsionsleistung von 10 bis 100 MW haben und die Generatoren in der Summe eine Gesamtleistung im Bereich von 10 bis 150 MW und die Brennstoffzellenanlage eine Leistung im Bereich von 2 bis 5 MW erzeugen.

Die Brennstoffzellen der Brennstoffzellenanlage 10 werden mit reinem Wasserstoff als Brennstoff und Luft als Oxidant betrieben.

Der Wasserstoff wird durch einen Elektrolyseur 60 erzeugt, der an seinem elektrischen Eingang über nicht näher dargestellten Schalter und einen Gleichrichter 80 sowohl mit dem ersten Teilnetz 43 als auch mit dem zweiten Teilnetz 44 verbindbar ist und somit einen weiteren elektrischer Verbraucher darstellt.

Zur Zwischenspeicherung des von dem Elektrolyseur 60 erzeugten Wasserstoffes weist das Schiff 41 einen Wasserstoffspeicher 61 auf, der mit einem Wasserstoffausgang des Elektrolyseurs 60 verbunden ist, um ihm den erzeugten Wasserstoff zuzuführen.

Auch die Brennstoffzellenanlage 50 ist mit dem Wasserstoffspeicher 61 verbunden, so dass der Brennstoffzellenanlage 50 Wasserstoff aus dem Wasserstoffspeicher 61 zuführbar ist. Daneben ist der Brennstoffzellenanlage 50 Umgebungsluft des Schiffes als Oxidant zuführbar.

Zur Verringerung des Platzbedarfs für den Wasserstoffspeicher 61 können ein nicht näher dargestellter Kompressor und/oder eine Kühleinrichtung zur Komprimierung und/oder Verflüssigung des Wasserstoffes vor dessen Zufuhr zu dem Wasserstoffspeicher 61 vorhanden sein. Weiterhin kann eine entsprechende Einrichtung zur Aufbereitung (z.B. Dekomprimierung und/oder Verdampfung) des gespeicherten Wasserstoffes vor dessen Zufuhr zur der Brennstoffzellenanlage 50 vorhanden sein.

Das Schiff 41 weist weiterhin einen mit einem Wasserzufuhreingang des Elektrolyseurs 60 verbundenen Wasserspeicher 63 zur Speicherung von Wasser für die Elektrolyse auf. Der Wasserspeicher 63 ist mit der Brennstoffzellenanlage 50 zur Zufuhr von Produktwasser der Brennstoffzellen zu dem Wasserspeicher 63 verbunden. Der von dem Elektrolyseur 60 erzeugte Sauerstoff kann in einem Sauerstoffspeicher 62 gespeichert und einer weiteren Verwendung, z.B. zur Sauerstoffanreicherung der der Brennstoffzellenanlage 50 zugeführten Luft, zugeführt.

Der Energieverbrauch des Elektrolyseurs 60 ist hierbei durch eine Steuer- und/oder Regelungseinrichtung 70 steuerbar und/oder regelbar und kann somit optimal auf die zu einem bestimmten Zeitpunkt in dem Netz 42 zur Verfügung stehende elektrische Energie angepasst werden.

Die Steuer- und/oder Regelungseinrichtung 70 weist dabei eine erste Steuer- und/oder Regelfunktion 71 auf, die dazu eingerichtet ist, den Energieverbrauch des Elektrolyseurs 60 derart zu steuern und/oder zu regeln, dass die Dieselmotoren 47 in einem vorgegebenen Betriebspunkt, insbesondere in einem Betriebspunkt mit einem optimalen Wirkungsgrad, arbeiten. Insbesondere ist es möglich, den Energieverbrauch des Elektrolyseurs 60 derart zu steuern und/oder zu regeln, dass durch den Elektrolyseur 60 und die anderen elektrischen Verbraucher 51, 53 die gesamte durch das Abwärmenutzungssystem 84 erzeugte elektrische Energie abgenommen wird. Eventuell vorhandene Überschussenergie kann dann durch den Elektrolyseur 60 in Wasserstoff und Sauerstoff umgesetzt werden und geht dadurch nicht verloren. Hierdurch kann der Wirkungsgrad des Gesamtsystems optimiert werden.

Außerdem weist die Steuer- und/oder Regelungseinrichtung 70 eine zweite Steuer- und/oder Regelfunktion 72 auf, dazu eingerichtet ist, die Energieerzeugung durch die Generatoren 46, 82 sowie den Energieverbrauch der Motoren 51, der weiteren elektrischen Verbraucher 53 und des Elektrolyseurs 60 in Abhängigkeit von einer benötigten Wasserstoffmenge zu steuern und/oder zu regeln, insbesondere derart zu steuern und/oder zu regeln, dass der Elektrolyseur 60 in einem Betriebspunkt mit maximaler Wasserstofferzeugung arbeitet, so dass eine maximale Wasserstoffmenge pro Zeiteinheit erzeugt wird. Ist für das Schiff 51 beispielsweise in Kürze ein längerer Hafenaufenthalt oder ein Aufenthalt in emissionssensiblen Gewässern geplant, für die eine möglichst lange Brennstoffzellen-Stromversorgung und somit ein möglichst großer Vorrat an Wasserstoff zur Verfügung stehen soll, so sorgt die zweite Steuer- und/oder Regelfunktion 72 dafür, dass dem Elektrolyseur 60 eine maximal von ihm aufnehmbare Energie zur Verfügung steht, so dass er in kürzester Zeit den größtmöglichen Ausstoß an Wasserstoff und Sauerstoff erzeugt. Die anderen elektrischen Verbraucher müssen hierbei in ihrem elektrischen Verbrauch gegenüber dem Elektrolyseur 60 zurücktreten.

## Patentansprüche

1. Schwimmende oder tauchende Einrichtung (1), insbesondere Über- oder Unterwasserschiff, mit
- Brennstoffzellen (10) zur Erzeugung elektrischer Energie für elektrische Verbraucher (11, 13) an Bord der Einrichtung (1), wobei die Brennstoffzellen mit Wasserstoff als Brennstoff betreibbar sind,
- einem Elektrolyseur (20) zur Erzeugung von Wasserstoff für die Brennstoffzellen (10) durch eine Elektrolyse von Wasser unter Verwendung von elektrischer Energie und
- einem Wasserstoffspeicher (21) zur Speicherung des von dem Elektrolyseur (20) erzeugten Wasserstoffs vor dessen Zufuhr zu den Brennstoffzellen (10),
- zumindest eine Antriebsmaschine (7) und einen von der Antriebsmaschine (7) angetriebenen Generator (6) zur Erzeugung der elektrischen Energie für den Elektrolyseur (20),
**dadurch gekennzeichnet, dass** der Generator (6), die Brennstoffzellen (10), der Elektrolyseur (20) und die elektrischen Verbraucher (11, 13) an ein gemeinsames elektrisches Netz (2) angeschlossen sind und dass der Energieverbrauch des Elektrolyseurs (20) durch eine Steuer- und/oder Regelungseinrichtung (30) steuerbar und/oder regelbar ist.

2. Einrichtung (1) nach Anspruch 1,
**gekennzeichnet durch** einen Sauerstoffspeicher (22) zur Speicherung des von dem Elektrolyseur (20) erzeugten Sauerstoffs vor dessen Zufuhr zu den Brennstoffzellen (10).

3. Einrichtung (1) nach Anspruch 1 oder 2,
**gekennzeichnet durch** einen Wasserspeicher (23) zur Speicherung von Wasser für die Elektrolyse des Elektrolyseurs (20).

4. Einrichtung (1) nach Anspruch 3,
**dadurch gekennzeichnet, dass** die Brennstoffzellen (10) mit dem Wasserspeicher (23) zur Zufuhr von Produktwasser der Brennstoffzellen (10) zu dem Wasserspeicher (23) verbunden ist.

5. Einrichtung (1) nach einem der vorhergehenden Ansprüche, **gekennzeichnet durch** einen Kompressor und/oder eine Kühleinrichtung (26) zur Komprimierung und/oder Verflüssigung des Wasserstoffes und/oder Sauerstoffes vor dessen Zufuhr zu dem Wasserstoffspeicher (21) bzw. Sauerstoffspeicher (22).

6. Einrichtung (1) nach einem der vorhergehenden Ansprüche, **dadurch gekennzeichnet, dass** der Generator (6) mit den elektrischen Verbrauchern (11, 13) zu deren Versorgung mit elektrischer Energie verbindbar bzw. verbunden ist.

7. Einrichtung (1) nach einem der vorhergehenden Ansprüche, **dadurch gekennzeichnet, dass** der Generator (6) über einen Gleichrichter (8) mit dem Elektrolyseur (20) verbindbar bzw. verbunden ist.

8. Einrichtung (1) nach Anspruch 1,
**dadurch gekennzeichnet, dass** das elektrische Netz (2) ein Gleichstromnetz umfasst, mit dem der Elektrolyseur (20) verbindbar bzw. verbunden ist.

9. Einrichtung (1) nach einem der vorhergehenden Ansprüche,
**dadurch gekennzeichnet, dass** parallel zu dem Generator (6) eine Batterie (9) geschaltet ist.

10. Einrichtung (1) nach Anspruch 1,
**dadurch gekennzeichnet, dass** die Steuer- und/oder Regelungseinrichtung (30) dazu eingerichtet ist, den Energieverbrauch des Elektrolyseurs (20) derart zu steuern und/oder zu regeln, dass eine Antriebsmaschine (7) zum Antrieb eines Generators (6) zur Erzeugung elektrischer Energie für den Elektrolyseur (20) in einem vorgegebenen Betriebspunkt, insbesondere in einem Betriebspunkt mit einem optimalen Wirkungsgrad, arbeitet.

11. Einrichtung (1) nach Anspruch 1 oder 10,
**dadurch gekennzeichnet, dass** die Steuer- und/oder Regelungseinrichtung (30) dazu eingerichtet ist, eine Energieerzeugung durch zumindest einen Generator (6) sowie den Energieverbrauch der elektrischen Verbraucher (11, 13) und des Elektrolyseurs (20) in Abhängigkeit von einer benötigten Wasserstoff- und oder Sauerstoffmenge zu steuern und/oder zu regeln, insbesondere derart zu steuern und/oder zu regeln, dass der Elektrolyseur (20) in einem Betriebspunkt mit maximaler Wasserstoff- und/oder Sauerstofferzeugung arbeitet.

12. Einrichtung (1) nach einem der vorhergehenden Ansprüche, **dadurch gekennzeichnet, dass** der Elektrolyseur (20) einige oder alle der Brennstoffzellen (10) umfasst.

13. Einrichtung (1) nach einem der vorhergehenden Ansprüche, **dadurch gekennzeichnet, dass** der Elektrolyseur (20) und/oder der Sauerstoffspeicher (22) an ein Lufterneuerungssystem (25) der schwimmenden oder tauchenden Einrichtung (1) zu dessen Versorgung mit Sauerstoff angeschlossen ist.

## Claims

1. Floating or submerging device (1), in particular a surface ship or submersible vessel, having
- fuel cells (10) for generating electrical energy for electrical consumers (11, 13) on board the device (1), wherein the fuel cells can be operated with hydrogen as a fuel,
- an electrolyser (20) for generating hydrogen for the fuel cells (10) by the electrolysis of water using electrical energy and
- a hydrogen store (21) for storing the hydrogen generated by the electrolyser (20) before said hydrogen is fed to the fuel cells (10),
- at least a driving motor (7) and a generator (6) driven by the driving motor (7) for generating the electrical energy for the electrolyser (20),
**characterised in that** the generator (6), the fuel cells (10), the electrolyser (20) and the electrical consumers (11, 13) are connected to a common electrical network (2) and that the energy consumption of the electrolyser (20) is controllable and/or regulable by a control and/or regulating device (30).

2. Device (1) according to claim 1,
**characterised by** an oxygen store (22) for storing the oxygen generated by the electrolyser (20) before said oxygen is fed to the fuel cells (10).

3. Device (1) according to claim 1 or 2,
**characterised by** a water store (23) for storing water for the electrolysis by the electrolyser (20).

4. Device (1) according to claim 3,
**characterised in that** the fuel cells (10) are connected to the water store (23) for feeding water produced by the fuel cells (10) to the water store (23).

5. Device (1) according to one of the preceding claims,
**characterised by** a compressor and/or a cooling device (26) for compressing and/or liquefying the hydrogen and/or the oxygen before feeding thereof, respectively, to the hydrogen store (21) or the oxygen store (22).

6. Device (1) according to one of the preceding claims,
**characterised in that** the generator (6) can be or is connected to the electrical consumers (11, 13) for the supply thereof with electrical energy.

7. Device (1) according to one of the preceding claims,
**characterised in that** the generator (6) can be or is connected to the electrolyser (20) via a rectifier (8).

8. Device (1) according to claim 1,
**characterised in that** the electrical network (2) comprises a direct current network to which the electrolyser (20) can be or is connected.

9. Device (1) according to one of the preceding claims,
**characterised in that** a battery (9) is connected in parallel with the generator (6).

10. Device (1) according to claim 1,
**characterised in that** the control and/or regulating device (30) is configured to control and/or regulate the energy consumption of the electrolyser (20) such that a driving motor (7) for driving a generator (6) for generating electrical energy for the electrolyser (20) operates at a pre-determined operating point, in particular, at an operating point with an optimum efficiency level.

11. Device (1) according to claim 1 or 10,
**characterised in that** the control and/or regulating device (30) is configured to control and/or regulate energy generation by at least a generator (6) and the energy consumption of the electrical consumers (11, 13) and of the electrolyser (20) depending on a quantity of hydrogen and/or oxygen required, in particular such that the electrolyser (20) functions at an operating point with maximum hydrogen and/or oxygen generation.

12. Device (1) according to one of the preceding claims,
**characterised in that** the electrolyser (20) comprises some or all of the fuel cells (10).

13. Device (1) according to one of the preceding claims,
**characterised in that** the electrolyser (20) and/or the oxygen store (22) is connected to an air conditioning system (25) of the floating or submerging device (1) in order to supply said system with oxygen.

## Revendications

1. Dispositif (1) flottant ou plongeant, notamment navire sur l'eau ou sous l'eau, comprenant
- des piles (10) à combustible de production d'énergie électrique pour des consommateurs (11, 13) électriques à bord du dispositif (1), les piles à combustible pouvant fonctionner avec de l'hydrogène comme combustible,
- un électrolyseur (20) de production d'hydrogène pour les piles (10) à combustible, par une électrolyse de l'eau en utilisant de l'énergie électrique et
- un accumulateur (21) d'hydrogène pour accumuler l'hydrogène produit par l'électrolyseur (20), avant son envoi aux piles (10) à combustible,
- au moins une machine (7) d'entraînement et un alternateur (6) entraîné par la machine (7) d'entraînement pour produire l'énergie électrique pour l'électrolyseur (20),
**caractérisé en ce que** l'alternateur (6), les piles (10) à combustible, 1'électrolyseur (20) et les consommateurs (11, 13) électriques sont raccordés à un réseau (2) électrique commun et **en ce que** la consommation d'énergie de l'électrolyseur (20) peut être commandée et/ou réglée par un dispositif (30) de commande et/ou de réglage.

2. Dispositif (1) suivant la revendication 1,
**caractérisé par** un accumulateur (22) d'oxygène, pour accumuler l'oxygène produit par l'électrolyseur (20) avant son envoi aux piles (10) à combustible.

3. Dispositif (1) suivant la revendication 1 ou 2,
**caractérisé par** un accumulateur (23) d'eau, pour accumuler de l'eau pour l'électrolyse et l'électrolyseur (20).

4. Dispositif (1) suivant la revendication 3,
**caractérisé en ce que** les piles (10) à combustible communiquent avec l'accumulateur (23) d'eau, pour l'envoi d'eau produite des piles (10) à combustible à l'accumulateur (23) d'eau.

5. Dispositif (1) suivant l'une des revendications précédentes,
**caractérisé par** un compresseur et/ou un dispositif (26) de refroidissement, pour comprimer et/ou pour liquéfier l'hydrogène et/ou l'oxygène, avant son envoi à l'accumulateur (21) d'hydrogène ou à l'accumulateur (22) d'oxygène.

6. Dispositif 1) suivant l'une des revendications précédentes,
**caractérisé en ce que** l'alternateur (6) est relié aux consommateurs (11, 13) électriques pour l'alimentation en énergie électrique ou peut l'être.

7. Dispositif (1) suivant l'une des revendications précédentes,
**caractérisé en ce que** l'alternateur (6) est relié à l'électrolyseur (20) par un redresseur (8) ou peut l'être.

8. Dispositif (1) suivant la revendication 1,
**caractérisé en ce que** le réseau (2) électrique comprend un réseau à courant continu, auquel l'électrolyseur (20) est relié ou peut l'être.

9. Dispositif (1) suivant l'une des revendications précédentes,
**caractérisé en ce qu'**une batterie (9) est montée en parallèle à l'alternateur (6).

10. Dispositif (1) suivant la revendication 1,
**caractérisé en ce que** le dispositif (30) de commande et/ou de réglage est conçu pour commander et/ou régler la consommateur d'énergie de l'électrolyseur (20), de manière à ce qu'une machine (7) d'entraînement d'un alternateur (6) de production d'énergie électrique pour l'électrolyseur (20) travaille en un point de fonctionnement donné à l'avance, notamment en un point de fonctionnement ayant le rendement le meilleur.

11. Dispositif (1) suivant la revendication 1 ou 10,
**caractérisé en ce que** le dispositif (30) de commande et/ou de réglage est conçu pour commander et/ou régler une production d'énergie par au moins un alternateur (6), ainsi que la consommation d'énergie des consommateurs (11, 13) électriques et de l'électrolyseur (20) en fonction d'une quantité nécessaire d'hydrogène et/ou d'oxygène en les commandant et/ou en les réglant notamment, de manière à ce que 1'électrolyseur (20) travaille à un point de fonctionnement ayant une production maximum d'hydrogène et/ou d'oxygène.

12. Dispositif (1) suivant l'une des revendications précédentes,
**caractérisé en ce que** l'électrolyseur (20) comprend certaines des piles (10) à combustible ou toutes les piles (10) à combustible.

13. Dispositif (1) suivant l'une des revendications précédentes,
**caractérisé en ce que** l'électrolyseur (20) et/ou l'accumulateur (22) d'oxygène est raccordé à un système (25) de renouvellement de l'air, du dispositif (1) flottant ou plongeant, pour son alimentation en oxygène.
